# EUROPÄISCHE PATENTSCHRIFT

(11) **EP 0 887 360 B1**
(45) Veröffentlichungstag und Bekanntmachung des Hinweises auf die Patenterteilung: **13.08.2003**
(21) Anmeldenummer: 98111870.6
(22) Anmeldetag: 26.06.1998
(51) Int. Cl.: C08F 126/10

(54) **Verfahren zur Herstellung von niedermolekularen Homopolymerisaten des N-Vinylpyrrolidons**
Process for preparing low molecular weight homopolymers of N-vinylpyrrolidone
Procédé pour la préparation d'homopolymères de N-vinylpyrrolidone à bas poids moléculaire

(30) Priorität: 27.06.1997 DE 19727476
(43) Veröffentlichungstag der Anmeldung: 30.12.1998
(73) Patentinhaber: BASF AKTIENGESELLSCHAFT, 67056 Ludwigshafen (DE)
(72) Erfinder: Kothrade, Stephan, 67117 Linburgerhof (DE); Blankenburg, Rainer, 70469 Stuttgart-Feuerbach (DE); Peters, Iris, 67245 Lambsheim (DE); Sanner, Axel, 67227 Frankenthal (DE)
(74) Vertreter: Kinzebach, Werner, Dr.

(56) Entgegenhaltungen:
- EP-A- 0 215 379
- EP-A- 0 273 238
- EP-A- 0 761 699
- WO-A-94/26796
- DE-C- 922 378
- US-A- 5 362 815

## Beschreibung

Die vorliegende Erfindung betrifft ein Verfahren zur Herstellung von hochkonzentrierten, wässrigen Lösungen niedermolekularer Homopolymerisate des N-Vinylpyrrolidons.

Die Herstellung von Polymerisaten des N-Vinylpyrrolidons durch radikalische Polymerisation ist bekannt. Der Mechanismus der Polymerisation unter verschiedenen Bedingungen ist beispielsweise in Polymer Journal, 17, 143-152 (1985) beschrieben. Die Polymerisation in organischen Lösungsmitteln, beispielsweise nach der US 4 053 696 in alkoholischer Lösung, führt zu niedermolekularem Polyvinylpyrrolidon, da die organischen Lösungsmittel als Kettenregler wirken können. Zur Herstellung hochkonzentrierter wässriger Lösungen des Polymerisats muss jedoch zumindest der größte Teil der organischen Lösungsmittel abdestilliert und dann entweder entsorgt oder aufgearbeitet werden.

Die Polymerisation von N-Vinylpyrrolidon in wässriger Lösung wurde bisher meist in Gegenwart von Wasserstoffperoxid als Starter durchgeführt, wie es beispielsweise in der US 2 335 454 beschrieben ist. Das Molekulargewicht des Polyvinylpyrrolidons hängt dabei von der Wasserstoffperoxidkonzentration ab, niedrige Molekulargewichte entstehen durch hohe Wasserstoffperoxidkonzentrationen und umgekehrt. So beschreiben die DE-C-922 378 und die EP-A-0 215 379 Verfahren zur Herstellung von niedermolekularem Polyvinylpyrrolidon durch radikalische Lösungspolymerisation in Wasser, wobei H₂O₂ als Initiator verwendet wird. Hochkonzentrierte wässrige Lösungen des Polyvinylpyrrolidons sind jedoch nicht herstellbar, da hohe Monomerkonzentrationen von > 30 Gew.-% ein Beherrschen der exothermen Reaktion unmöglich machen und bei Zulaufverfahren die stark pfropfende Wirkung des Wasserstoffperoxids zu unerwünschtem Molekulargewichtsaufbau führt.

Aus der WO 94/26796 ist die Herstellung von niedermolekularen Copolymerisaten aus N-Vinylimidazol und N-Vinylpyrrolidon unter Verwendung eines Azostarters in wässriger Lösung in Gegenwart einer Schwefelverbindung als Regler bekannt.

Die EP-A-0 761 699 beschreibt die Herstellung von niedermolekularem Polyvinylpyrrolidon in wässriger Lösung, wobei vorzugsweise Azostarter oder Peroxide als Initiator verwendet werden und Verbindungen, die Schwefel in gebundener Form enthalten, als Polymerisationsregler eingesetzt werden.

Die DE 2 218 935 beschreibt die Polymerisation von N-Vinylpyrrolidon, gegebenenfalls im Gemisch mit untergeordneten Mengen anderer monoolefinisch ungesättigter Monomeren, in wässrigem Medium in Gegenwart von wasserunlöslichen, radikalbildenden Polymerisationskatalysatoren, die man in Form einer feinteiligen Suspension in einer wässrigen Lösung der N-Vinylpyrrolidon-Polymerisate zufügt.

Aufgabe der vorliegenden Erfindung war die Bereitstellung eines einfachen Verfahrens zur Herstellung von hochkonzentrierten, wässrigen Lösungen niedermolekularer Homopolymerisate des N-Vinylpyrrolidons.

Es wurde nun gefunden, dass diese Aufgabe erfindungsgemäß gelöst wird, wenn man in wässriger Lösung in Gegenwart bestimmter Polymerisationsregler polymerisiert.

Gegenstand der vorliegenden Erfindung ist daher ein Verfahren zur Herstellung von hochkonzentrierten, wässrigen Lösungen niedermolekularer Homopolymerisate des N-Vinylpyrrolidons durch radikalische Lösungspolymerisation in wässrigem Medium mit H₂O₂ als Initiator, das dadurch gekennzeichnet ist, dass in Gegenwart von 0,1 bis 30 Gew.-%, bezogen auf eingesetztes N-Vinylpyrrolidon, eines Polymerisationsreglers, der ausgewählt ist unter C₁-C₆-Alkanolen, Hydroxylaminsalzen und wasserlöslichen Verbindungen, die Schwefel in gebundener Form enthalten, polymerisiert wird.

Ein Vorteil dieses Verfahrens liegt in einer gesteigerten Raum-Zeit-Ausbeute der Polymerisationsanlage. Weiterhin sind die hochkonzentrierten Polymerisatlösungen auch hinsichtlich des Transports und der Überführung in ein Pulverprodukt vorteilhaft.

Als Initiator für die radikalische Lösungspolymerisation des N-Vinylpyrrolidons wird Wasserstoffperoxid verwendet. Es ist wasserlöslich, preisgünstig, kommerziell verfügbar und verunreinigt die Polymerlösung nicht durch Zerfallsprodukte. Der Initiator wird in Mengen von 0,1 bis 10 Gew.-%, bevorzugt 0,5 bis 5 Gew.-%, bezogen auf die Menge an N-Vinylpyrrolidon, eingesetzt. Die kommerziell verfügbare, 30 oder 50 gew.-%ige Lösung kann gegebenenfalls vor dem Zusatz zur Reaktionslösung auf Konzentrationen von ca. 10 Gew.-% verdünnt werden.

Vorteilhaft wird H₂O₂ zusammen mit Übergangsmetallverbindungen, deren Übergangsmetall in wässriger Lösung in verschiedenen Oxidationsstufen vorliegen kann, beispielsweise Eisen(II)-Salzen oder Kupfer(II)-Salzen, sog. Redoxinitiatorsystemen, verwendet.

Als Polymerisationsmedium wird Wasser verwendet. Die Polymerisation wird bevorzugt bei pH-Werten im Bereich von 6 bis 9 durchgeführt, um eine Hydrolyse des N-Vinylpyrrolidons zu vermeiden. Vorzugsweise werden daher die Lösungen der Einzelkomponenten vor Beginn der Polymerisation mit einer geeigneten Base, beispielsweise wässriger Natronlauge oder wässriger Ammoniaklösung, auf diesen pH-Bereich eingestellt oder der pH-Wert des Reaktionsmediums durch Zusatz einer geeigneten Base während der Polymerisation im Bereich von 6 bis 9 gehalten.

Die Polymerisationstemperaturen sind so zu wählen, dass die Halbwertszeiten des Initiatorzerfalls bei 0,5 bis 5 Stunden, vorzugsweise 1 bis 3 Stunden, liegen. Dies ist üblicherweise im Temperaturbereich von 60 °C bis 85 °C der Fall. Daher liegen die Polymerisationstemperaturen vorzugsweise im Bereich von 60 °C bis 85 °C, insbesondere zwischen 65 °C und 80 °C.

Die Polymerisation wird bevorzugt in Gegenwart von Polymerisationsreglern durchgeführt, die Schwefel in gebundener Form enthalten, wie sie beispielsweise in der WO 94/26796 genannt sind. Verbindungen dieser Art sind beispielsweise anorganische Hydrogensulfite, Disulfite und Dithionite oder organische Sulfide, Disulfide, Polysulfide, Sulfoxide, Sulfone und Mercaptoverbindungen. Folgende Polymerisationsregler werden beispielhaft genannt: Din-butylsulfid, Di-n-octylsulfid, Diphenylsulfid, Thiodiglycol, Ethylthioethanol, Diisopropyldisulfid, Di-n-butyl-disulfid, Di-nhexyldisulfid, Diacetyldisulfid, Di-t-butyltrisulfid und Dimethylsulfoxid. Bevorzugt als Polymerisationsregler eingesetzte Verbindungen sind Mercaptoverbindungen, Dialkylsulfide, Dialkyldisulfide und/oder Diarylsulfide. Beispiele für diese Verbindungen sind Ethylthioglykolat, Cystein, 2-Mercaptoethanol, 1,3-Mercaptopropanol, 3-Mercaptopropan-1,2-diol, 1,4-Mercaptobutanol, Mercaptoessigsäure, 3-Mercaptopropionsäure, Mercaptobernsteinsäure, Thioglycerin, Thioessigsäure, Thioharnstoff und Alkylmercaptane, wie n-Butylmercaptan, n-Hexylmercaptan oder n-Dodecylmercaptan. Davon werden Mercaptoalkohole und Mercaptocarbonsäuren bevorzugt eingesetzt.

Geeignete Regler sind auch Hydroxylaminsalze, wie Hydroxylammoniumsulfat.

Besonders bevorzugte Polymerisationsregler sind C₁-C₆-Alkohole, wobei Ethanol, n-Propanol und Isopropanol ganz besonders geeignet sind.

Die Polymerisationsregler werden in Mengen von 0,1 bis 30 Gew.-%, bevorzugt 0,1 bis 20 Gew.-%, bezogen auf das bei der Polymerisation eingesetzte Monomer N-Vinylpyrrolidon verwendet. Es können auch Mischungen der erfindungsgemäß einzusetzenden Polymerisationsregler angewendet werden.

Die Polymerisation von N-Vinylpyrrolidon kann in Wasser bei hoher Monomerkonzentration von > 30 Gew.-% aus sicherheitstechnischen Gründen nicht nach der Batch-Fahrweise durchgeführt werden. Als Polymerisationsmethoden sind daher Semi-Batch-Verfahren und Zulaufverfahren bevorzugt anzuwenden. Bei diesen Verfahrensvarianten wird mindestens eine der Komponenten oder ein Gemisch mehrerer Komponenten einem Gemisch der restlichen Komponenten innerhalb einer bestimmten Zeit kontinuierlich oder portionsweise zugegeben. Zum einen kann einem Gemisch aus N-Vinylpyrrolidon und Wasser bei der Polymerisationstemperatur eine Lösung des Polymerisationsreglers und eine Initiatorlösung zugefügt werden. Eine andere Methode besteht darin, Wasserstoffperoxid unterhalb oder bei der Polymerisationstemperatur in die Vorlage zu geben und nur den Regler oder eine Lösung des Reglers nach Erreichen der Polymerisationstemperatur innerhalb eines vorgegebenen Zeitraums dem Reaktionsgemisch zuzuführen. Eine weitere Variante der Zulauftechnik besteht darin, dass man die Vorlage auf eine Temperatur erwärmt, bei der die Polymerisation abläuft und dann Regler, Wasserstoffperoxid und N-Vinylpyrrolidon in getrennten Zuläufen oder gemeinsam zugibt. Bei dieser Technik dient ein Gemisch aus Wasser und Vinylpyrrolidon und/oder Wasserstoffperoxid und/oder Regler als Vorlage. Erfindungsgemäß ist eine Verfahrensweise bevorzugt, bei der der Polymerisationsregler während der Polymerisation der Monomeren kontinuierlich oder portionsweise zudosiert oder in der Vorlage vorgelegt wird.

Die nach diesen Verfahren erhaltenen erfindungsgemäßen Polyvinylpyrrolidonpolymerisate haben ein gewichtsmittleres Molekulargewicht von 2000 bis 80000, vorzugsweise 5000 bis 60000. Die K-Werte der erfindungsgemäßen Polymerisate liegen im Bereich von 10 bis 50, vorzugsweise 15 bis 40 (nach H. Fikentscher, Cellulosechemie, Band 13, 1932, Seite 58 bis 64, 1 gew.-%ige Lösung in Wasser bei 25 °C). Die erfindungsgemäßen, hochkonzentrierten Polymerisatlösungen haben einen Feststoffgehalt von 40 bis 80 Gew.-%, bevorzugt 45 bis 60 Gew.-%. Sie zeichnen sich außerdem durch enge Molekulargewichtsverteilung (M_{w}/Mₙ≤7) aus.

Gegebenenfalls setzt man die erfindungsgemäßen Polymerisatlösungen im Anschluß an die Polymerisation einer physikalischen Nachbehandlung, beispielsweise einer Wasserdampfdestillation oder Strippen mit Stickstoff, aus, wobei flüchtige Verunreinigungen aus der Lösung entfernt werden. Man kann die Polymerisatlösung auch einer chemischen Nachbehandlung unter Zusatz von Polymerisationsinitiatoren (z. B. den oben genannten) und Erhitzen der Polymerisatlösungen auf Temperaturen, die gegebenenfalls oberhalb der Polymerisationstemperatur liegen, unterwerfen.

Die in der Polymerisatlösung vorhandenen Regler, insbesondere Ethanol und Isopropanol, können entweder im Produkt verbleiben oder gegebenenfalls destillativ aus dem Produkt entfernt werden. Die nach dem erfindungsgemäßen Verfahren erhältlichen Homopolymerisate des N-Vinylpyrrolidons sind arm an Verunreinigungen, wie 2-Pyrrolidon oder N-Vinylpyrrolidon. Sie weisen Gehalte an 2-Pyrrolidon unter 2,0 Gew.-%, bezogen auf das Polymer, auf. Insbesondere sind keine Starterzerfallsprodukte enthalten.

Die wässrigen Polyvinylpyrrolidonlösungen können gegebenenfalls in an sich bekannter Weise durch Trocknungsverfahren in feste Pulver überführt werden. Als Trocknungsverfahren zur Erzeugung pulverförmiger Polymerisate kommen alle solchen in Frage, die zur Trocknung aus wässriger Lösung geeignet sind. Bevorzugte Verfahren sind die Sprühtrocknung, die Sprühwirbelschichttrocknung, die Walzentrocknung und die Bandtrocknung, ebenfalls anwendbar sind die Gefriertrocknung und die Gefrierkonzentrierung.

Bevorzugt kommt das erfindungsgemäß erhaltene niedermolekulare Polyvinylpyrrolidon in hochkonzentrierter, wässriger Lösung in kosmetischen und pharmazeutischen Zubereitungen zur Anwendung, insbesondere als lagerstabiles Desinfektionsmittel im Komplex mit Jod. Weiter sind die Polyvinylpyrrolidone als Waschmitteladditive (z. B. Farbübertragungsinhibitoren) sowie für zahlreiche technische Anwendungen (Photoresists, Verdicker, Klebstoffe, Hilfsmittel für die Textileinfärbung, Klebestifte, Metallquenchbäder, Trennung von Edelmetallen, Aufhellmittel, Komplexe mit Antioxidantien, Betonzusatzmittel, Coating von Polyolefinen/Fasern, Druckfarben, Diazotypien, elektrisch leitende Schichten, Elektrodengele, Hautklebegele, Entfernung polyvalenter Kationen, Entfernung von Poylphenolen, Enzym- und Proteinkomplexe, Farbmischungsinhibitoren, Festbatterien, Festelektrolyte, Fischfuttergranulat, Fixateur für Parfümöle, Flexodruckplatten, Flockungsmittel, Fotographische Platten, Gasanalytik, Gipsbinden, Schmiermittel, Haftvermittler für Farbstoffe, Hydrophilisierung von Oberflächen, Ionenaustauscher, Isomerisierungsinhibitor, Schutzkolloid, Tinten, Jetinks, Kugelschreiberpasten, Katalysatoren, Kathedercoating, Keramikbinder, Kesselsteinentferner, Klebstoff für Nährböden, Komplexbildung mit organischen oder anorganischen Verbindungen zur Erhöhung der Adsorbierbarkeit/Hydrophobie, Komplexe mit Halogen, Komplexe mit Polymeren, Konservierungsmittel, Kontaktlinsen, Dialysemembrane, Korrosionsschutz, Kunststoffadditive, Lackhilfsstoffe, lichtempfindliche Materialien, Lithographie, Solubilisierung, Luftfilter, Membranherstellung, Metallguss, Metallhärtung, Stabilisierung von Metallkolloiden, Metallkomplexe für reversible Sauerstoffabsorption, Mikroverkapselung, Membrane, Öl- und Farbstoffentfernung aus Wasser, Ölrückgewinnung, Papierhilfsmittel, Papierstreichfarben, Phasen-Transfer-Katalysatoren, Photoimaging, Pigmentdispersionen, Protonenleiter, Reinigungsmittel von Abwässern, Saatgutbeize, Saatgutcoating, Schmiermitteladditive, Silberhalogenid-Emulsionen, Soil Release, Stabilisierung von Peroxiden, Synthetische Fasern, Tertiäre Erdölgewinnung, Textilhilfsmittel, Trennung von Kohlenwasserstoffgemischen, Viskositätsmodifizierung, wärmebeständige Schichten, wärmeempfindliche Schichten, wärmeempfindliche Widerstände, wasserlösliche Filme, Zigarettenfilter) brauchbar.

Die nachfolgenden Beispiele erläutern die Erfindung, ohne sie zu beschränken.

### Beispiel 1

Es wurden zunächst die folgenden Lösungen vorbereitet:
1. Vorlage, bestehend aus 500 g vollentsalztem Wasser, 140 g N-Vinylpyrrolidon und 90 g Isopropanol.
2. Zulauf 1, bestehend aus 6,8 g Wasserstoffperoxid (30%ig) und 0,26 ml Kupfer(II)chlorid-Lösung (0,01%ig).
3. Zulauf 2, bestehend aus 480 g N-Vinylpyrrolidon.
4. Zulauf 3, bestehend aus 7,5 g Wasserstoffperoxid (30%ig), in 4 Portionen à 1,25 g und 1 Portion à 2,5 g.
5. Zulauf 4, bestehend aus 0,66 ml Kupfer(II)chlorid-Lösung (0,01%ig) in 4 Portionen à 0,11 ml und 1 Portion à 0,22 ml.
6. Zulauf 5, bestehend aus 100 g Ammoniaklösung (5%ig).
7. Zulauf 6, bestehend aus 3,0 g Wasserstoffperoxid (30%ig) und 0,88 ml Kupfer(II)chlorid-Lösung (0,01%ig).
8. Zulauf 7, bestehend aus 3,0 g Wasserstoffperoxid (30%ig) und 0,88 ml Kupfer(II)chlorid-Lösung (0,01%ig).
9. Zulauf 8, bestehend aus 3,0 g Wasserstoffperoxid (30%ig).

In einer Laborapparatur aus Glas mit Ankerrührer wurde unter Stickstoff und unter Rühren die Vorlage auf 75 °C aufgeheizt. Bei Erreichen der Temperatur erfolgte die Zugabe von Zulauf 1. Durch Zudosieren von Zulauf 5 während der gesamten Zykluszeit wurde ein pH-Wert von 7,5 gehalten. Nach Zugabe von Zulauf 1 wurde Zulauf 2 in 2 Stunden zudosiert. 0,5 Stunden, 1 Stunde, 1,5 Stunden, 2 Stunden und 2,5 Stunden nach Beginn von Zulauf 2 erfolgte die Zugabe jeweils einer Portion der Zuläufe 3 und 4, wobei die Zugabe der jeweils größten Portion nach 2 Stunden erfolgte. Nach Ende von Zulauf 2 wurde die Temperatur von 75 °C weitere 2 Stunden gehalten, anschließend wurde Zulauf 6 zugegeben. Nach einer weiteren Stunde bei 75 °C erfolgte die Zugabe von Zulauf 7. Die Temperatur wurde nochmals 1 Stunde gehalten. Danach wurde Zulauf 8 zugegeben und weitere 2 Stunden auf 75 °C erhitzt. Nach Erkalten der Reaktionsmischung resultierte eine klare, blassgelbe und hochviskose Polymerlösung mit einem Feststoffgehalt von 51 Gew.-%. Der K-Wert des Produktes (gemessen 1 gew.-%ig in Wasser) lag bei 30,3.

### Vergleichsbeispiel 1

Es wurden zunächst die gleichen Lösungen wie in Beispiel 1 vorbereitet, wobei das Isopropanol in Lösung 1) durch die gleiche Menge Wasser ersetzt wurde. Anschließend wurde wie in Beispiel 1 beschrieben polymerisiert.

Nach Erkalten der Reaktionsmischung resultierte eine klare, orangegelbe und hochviskose Polymerlösung mit einem Feststoffgehalt von 49,9 Gew.-%. Der K-Wert des Produktes (gemessen 1 gew.-%ig in Wasser) lag bei 43,0.

Das Molekulargewicht der Polymerisate wurde auch mittels Gelpermeationschromatographie untersucht. Als Elutionsmittel verwendete man Wasser/Acetonitril (90:10) mit 0,15 M NaCl und 0,03 M NaH₂PO₄. Als Trennmaterial diente TSK PW-xl 3000, TSK PW-xl 4000, TSK PW-xl 5000 und TSK PW-xl 6000 bei einer Säulentemperatur von 23 °C. Die Detektion erfolgte mittels UV-Photometrie bei 208 nm. Man kalibriete mit Polyvinylpyrrolidon, dessen integrale Molekulargewichtsverteilung durch Laserlichtstreukopplung bestimmt worden war. Die Ergebnisse sind in der nachfolgenden Tabelle 1 enthalten.

**Tabelle 1:**

| Gel-Permeations-Chromatographie (GPC)-Analysen der Produkte aus Beispiel 1 und dem Vergleichsbeispiel 1 | | | |
|---|---|---|---|
| Probenbezeichnung | Zahlenmittel Mn | Gewichtsmittel Mw | Mw/Mn |
| Beispiel 1 | 10900 +/- 100 | 48900 +/- 150 | 4,5 +/- 0,1 |
| Vergleichsbeispiel | 17000 +/- 300 | 226000 +/- 6000 | 13,3 +/- 0,2 |

Das Vergleichsbeispiel zeigt, dass der gewünschte K-Wert von ca. 30 (d. h., das Gewichtsmittel ist auf jeden Fall kleiner 60000 bzw. 80000) bei der erfindungsgemäßen, konzentrierten Fahrweise ohne Regler nicht erreicht werden kann und eine unerwünscht breite Molekulargewichtsverteilung (Mw/Mn) erhalten wird. Darüber hinaus ist das so erhaltene Produkt dunkler gefärbt.

### Beispiel 2

Es wurden zunächst die folgenden Lösungen vorbereitet:
1. Vorlage, bestehend aus 1000 g vollentsalztem Wasser, 280 g N-Vinylpyrrolidon und 180 g Isopropanol.
2. Zulauf 1, bestehend aus 13,6 g Wasserstoffperoxid (30%ig) und 0,52 ml Kupfer(II)chlorid-Lösung (0,01%ig) und 5,0 g 25%ige wässrige Ammoniaklösung.
3. Zulauf 2, bestehend aus 960 g-N-Vinylpyrrolidon.
4. Zulauf 3, bestehend aus 10,0 g Wasserstoffperoxid (30%ig), in 4 Portionen à 2,5 g.
5. Zulauf 4, bestehend aus 0,88 ml Kupfer(II)chlorid-Lösung (0,01%ig) in 4 Portionen à 0,22 ml.
6. Zulauf 5, bestehend aus 91,0 g wässriger Ammoniaklösung (5%ig).
7. Zulauf 6, bestehend aus 6,0 g Wasserstoffperoxid (30%ig) und 1,76 ml Kupfer(II)chlorid-Lösung (0,01%ig).
8. Zulauf 7, bestehend aus 6,0 g Wasserstoffperoxid (30%ig) und 1,76 ml Kupfer(II)chlorid-Lösung (0,01%ig).
9. Zulauf 8, bestehend aus 6,0 g Wasserstoffperoxid (30%ig).

In einem Laborstahlkessel mit Ankerrührer wurde unter Stickstoff und unter Rühren die Vorlage auf 75 °C aufgeheizt. Bei Erreichen der Temperatur erfolgte die Zugabe von Zulauf 1. Zulauf 5 wurde ab Zugabe von Zulauf 1 bis 7 Stunden zudosiert. Nach Zugabe von Zulauf 1 wurde Zulauf 2 in 2 Stunden zudosiert. 0,5 Stunden, 1 Stunde, 1,5 Stunden und 2 Stunden nach Beginn von Zulauf 2 erfolgte die Zugabe jeweils einer Portion der Zuläufe 3 und 4. Nach Ende von Zulauf 2 wurde die Temperatur von 75 °C weitere 2 Stunden gehalten, anschließend wurde Zulauf 6 zugegeben. Nach einer weiteren Stunde bei 75 °C erfolgte die Zugabe von Zulauf 7. Die Temperatur von 75 °C wurde nochmals 2 Stunden gehalten. Danach wurde Zulauf 8 zugegeben und weitere 2 Stunden auf 75 °C erhitzt. Anschließend wurde die Reaktionsmischung auf 35 °C abgekühlt und im Vakuum 1,5 Stunden destilliert. Nach Erkalten der Reaktionsmischung resultierte eine klare, blassgelbe und hochviskose Polymerlösung mit einem Feststoffgehalt von 58 Gew.-%. Der K-Wert des Produktes (gemessen 1 gew.-%ig in Wasser) lag bei 31,0.

### Beispiel 3

Es wurden die folgenden Lösungen vorbereitet:
Lösungen 1) bis 7) wie in Beispiel 1.
8. Zulauf 7, bestehend aus 9,30 g tert.-Butylhydroperoxid (70%ig).
9. Zulauf 8, bestehend aus 6,64 g Natriumsulfit und 20 g vollentsalztem Wasser.

In einer Laborapparatur aus Glas mit Ankerrührer wurde unter Stickstoff und unter Rühren die Vorlage auf 75 °C aufgeheizt. Bei Erreichen der Temperatur erfolgte die Zugabe von Zulauf 1. Mit Zulauf 5 wurde über die gesamte Zykluszeit ein pH-Wert von 7,5 gehalten. Nach Zugabe von Zulauf 1 wurde Zulauf 2 in 2 Stunden zudosiert. 0,5 Stunden, 1 Stunde, 1,5 Stunden, 2 Stunden und 2,5 Stunden nach Beginn von Zulauf 2 erfolgte die Zugabe jeweils einer Portion der Zuläufe 3 und 4, wobei die jeweils größte Portion nach 2 Stunden zugegeben wurde. Nach Ende von Zulauf 2 wurde weitere 2 Stunden die Temperatur von 75 °C gehalten, anschließend wurde Zulauf 6 zugegeben. Nach einer weiteren Stunde bei 75 °C wurde auf 60 °C abgekühlt. Danach erfolgte die Zugabe von Zulauf 7. Nach der Zugabe von Zulauf 7 wurde Zulauf 8 in 1,5 Stunden zudosiert. 3 Stunden wurde die Temperatur von 60 °C gehalten. Nach Erkalten der Reaktionsmischung resultierte eine klare, fast farblose und hochviskose Polymerlösung mit einem Feststoffgehalt von 51,8 Gew.-%. Der K-Wert des Produktes (gemessen 1 gew.-%ig in Wasser) lag bei 29,4.

### Beispiel 4

Es wurden zunächst die folgenden Lösungen vorbereitet:
1. Vorlage, bestehend aus 575 g vollentsalztem Wasser, 140 g N-Vinylpyrrolidon und 6,0 g Mercaptoethanol.
2. Zulauf 1, bestehend aus 6,8 g Wasserstoffperoxid (30%ig) und 0,26 ml Kupfer(II)chlorid-Lösung (0,01%ig) und 2,63 g von Zulauf 5.
3. Zulauf 2, bestehend aus 480 g-N-Vinylpyrrolidon.
4. Zulauf 3, bestehend aus 5,0 g Wasserstoffperoxid (30%ig), in 4 Portionen ä 1,25 g.
5. Zulauf 4, bestehend aus 0,44 ml Kupfer(II)chlorid-Lösung (0,01%ig) in 4 Portionen à 0,11 ml.
6. Zulauf 5, bestehend aus 25,0 ml Ammoniaklösung (25%ig).
7. Zulauf 6, bestehend aus 3,0 g Wasserstoffperoxid (30%ig) und 0,88 ml Kupfer(II)chlorid-Lösung (0,01%ig).
8. Zulauf 7, bestehend aus 3,0 g Wasserstoffperoxid (30%ig) und 0,88 ml Kupfer(II)chlorid-Lösung (0,01%ig).
9. Zulauf 8, bestehend aus 3,0 g Wasserstoffperoxid (30%ig).

In einer Laborapparatur aus Glas mit Ankerrührer wurde unter Stickstoff und unter Rühren die Vorlage auf 75 °C aufgeheizt. Bei Erreichen der Temperatur erfolgte die Zugabe von Zulauf 1. Durch Zudosieren von Zulauf 5 während der gesamten Zykluszeit wurde ein pH-Wert von 7,5 gehalten. Nach Zugabe von Zulauf 1 wurde Zulauf 2 in 2 Stunden zudosiert. 0,5 Stunden, 1 Stunde, 1,5 Stunden und 2 Stunden nach Beginn von Zulauf 2 erfolgte die Zugabe jeweils einer Portion der Zuläufe 3 und 4. Nach Ende von Zulauf 2 wurde weitere 1,5 Stunden die Temperatur von 75 °C gehalten, anschließend wurde Zulauf 6 zugegeben. Nach einer weiteren Stunde bei 75 °C erfolgte die Zugabe von Zulauf 7. Die Temperatur wurde nochmals 1 Stunde gehalten. Danach wurde Zulauf 8 zugegeben und weitere 2 Stunden auf 75 °C erhitzt. Nach Erkalten der Reaktionsmischung resultierte eine klare, gelbe und hochviskose Polymerlösung mit einem Feststoffgehalt von 52,3 Gew.-%. Der K-Wert des Produktes (gemessen 1 gew.-%ig in Wasser) lag bei 30,3.

## Patentansprüche

1. Verfahren zur Herstellung von hochkonzentrierten, wässrigen Lösungen niedermolekularer Homopolymerisate des N-Vinylpyrrolidons mit einem Feststoffgehalt von 40 bis 80 Gew.-% durch radikalische Lösungspolymerisation in wässrigem Medium mit H₂O₂ als Initiator, **dadurch gekennzeichnet, dass** in Gegenwart von 0,1 bis 30 Gew.-%, bezogen auf N-Vinylpyrrolidon, eines Polymerisationsreglers, der ausgewählt ist unter C₁-C₆-Alkanolen, Hydroxylaminsalzen und wasserlöslichen, Schwefel in gebundener Form enthaltenden Verbindungen, polymerisiert wird.

2. Verfahren nach Anspruch 1, **dadurch gekennzeichnet, dass** der Polymerisationsregler in Mengen von 0,1 bis 20 Gew.-%, bezogen auf die Menge des Monomers, eingesetzt wird.

3. Verfahren nach einem der Ansprüche 1 oder 2, **dadurch gekennzeichnet, dass** der Polymerisationsregler ausgewählt ist unter C₁- bis C₄-Alkanolen.

4. Verfahren nach Anspruch 3, **dadurch gekennzeichnet, dass** als Regler Ethanol, n-Propanol oder Isopropanol verwendet werden.

5. Verfahren nach einem der Ansprüche 1 bis 4, **dadurch gekennzeichnet, dass** der Initiator H₂O₂ in Mengen von 0,1 bis 10 Gew.-%, bevorzugt 0,5 bis 5 Gew.-%, bezogen auf die Menge N-Vinylpyrrolidon, eingesetzt wird.

## Claims

1. A process for preparing highly concentrated aqueous solutions of low molecular mass homopolymers of N-vinylpyrrolidone having a solids content of from 40 to 80% by weight by free-radical solution polymerization in an aqueous medium with H₂O₂ as initiator, which comprises carrying out the polymerization in the presence of from 0.1 to 30% by weight, based on N-vinylpyrrolidone, of a polymerization regulator which is selected from the group consisting of C₁-C₆-alkanols, hydroxylamine salts and water-soluble compounds containing sulfur in bonded form.

2. A process as claimed in claim 1, wherein said polymerization regulator is employed in amounts of from 0.1 to 20% by weight, based on the amount of the monomer.

3. A process as claimed in either of claims 1 and 2, wherein said polymerization regulator is selected from C₁-C₄-alkanols.

4. A process as claimed in claim 3, wherein said regulator used is ethanol, n-propanol or isopropanol.

5. A process as claimed in any of claims 1 to 4, wherein said H₂O₂ initiator is employed in amounts of from 0.1 to 10% by weight, preferably from 0.5 to 5% by weight, based on the amount of N-vinylpyrrolidone.

## Revendications

1. Procédé pour la préparation de solutions aqueuses fortement concentrées d'homopolymères de N-vinylpyrrolidone à bas poids moléculaire, ayant une teneur en solide de 40 à 80 % en poids, par polymérisation radicalaire en solution, en milieu aqueux avec H₂O₂ comme initiateur, **caractérisé par le fait qu'**on polymérise en présence de 0,1 à 30 % en poids, par rapport à la N-vinylpyrrolidone, d'un régulateur de polymérisation, qui est choisi parmi les alcanols en C₁-C₆, les sels d'hydroxylamine et les composés hydrosolubles contenant du soufre sous forme liée.

2. Procédé selon la revendication 1, **caractérisé par le fait qu'**on met en oeuvre le régulateur de polymérisation en des quantités de 0,1 à 20 % en poids, par rapport à la quantité du monomère.

3. Procédé selon l'une des revendications 1 ou 2, **caractérisé par le fait que** le régulateur de polymérisation est choisi parmi les alcanols en C₁ à C₄.

4. Procédé selon la revendication 3, **caractérisé par le fait qu'**on utilise comme régulateur l'éthanol, le n-propanol ou l'isopropanol.

5. Procédé selon l'une des revendications 1 à 4, **caractérisé par le fait que** l'initiateur H₂O₂ est utilisé en des quantités de 0,1 à 10 % en poids, de préférence de 0,5 à 5 % en poids, par rapport à la quantité de N-vinylpyrrolidone.
